# DEMANDE DE BREVET EUROPEEN

(11) **EP 1 526 469 A1**
(43) Date de publication de la demande: **27.04.2005**
(21) Numéro de dépôt: 03292612.3
(22) Date de dépôt: 21.10.2003
(51) Int. Cl.: G06F 17/60, G06F 17/30

(54) **Système informatique de sélection et de mise en communication télématique d'individus présentant des traits de caractère communs**

(71) Demandeur: Innovatron, 75006 Paris (FR)
(72) Inventeur: Moreno, Roland, 75006 Paris (FR)
(74) Mandataire: Dupuis-Latour, Dominique

(57) **Abrégé**

Ce système comprend un ensemble de *N* terminaux (10, 20) attribués chacun à une personne parmi *M*, et un site (40) comprenant des moyens de communication (30 ; 50) et d'interrogation (42), pour transmettre une batterie de *n* questions prédéfinies du type à choix multiples. Chaque terminal comprend des moyens d'identification, de réception et d'affichage des questions, et des moyens de saisie et d'émission de réponses. Le site comprend en outre : des moyens pour recueillir les réponses et définir pour chaque personne un vecteur de dimension *n* représentatif d'un profil propre ; des moyens pour comparer deux à deux les *M* vecteurs et déterminer à chaque fois un paramètre fonction du taux de réponses coïncidentes ; des moyens aptes, pour une personne donnée, à extraire une sous-population des *P* personnes avec les similitudes les plus élevées ; des moyens pour adresser à chaque personne les identifiants propres de ces *P* personnes ; et des moyens pour établir une communication bidirectionnelle entre la personne donnée et l'une au moins de ces *P* personnes.

## Description

La présente invention concerne un système informatique conçu pour détecter des traits de caractère communs entre plusieurs individus puis, pour chacun d'entre eux, sélectionner ceux des individus qui présentent le plus d'affinités avec lui et établir automatiquement avec ces derniers un lien de communication de nature télématique.

La recherche d'affinité entre individus est une démarche très ancienne qui, avec les technologies récentes, se concrétise par la mise en place de forums de discussion, d'échanges d'informations et de propositions, etc. entre intemautes.

Ces manières de procéder présentent cependant deux inconvénients majeurs.

Le premier inconvénient est la part importante de subjectivité dans la recherche et la sélection des individus censés présenter des affinités avec un intemaute donné : cette approche a lieu essentiellement par formulation de questions ouvertes, attente de commentaires en réponse, interprétation subjective de ces réponses, ... Ce processus introduit un aléa important dans la sélection des individus potentiellement intéressants, avec le double risque de "faux positifs" et de faux négatifs", c'est-à-dire de sélectionner des individus qui, après plus de considération, ne présentent pas l'intérêt qu'ils pouvaient laisser supposer à première vue ou, inversement de passer à côté d'individus réellement intéressants, mais qui n'ont pas formulé de réponse, ou qui l'ont formulée d'une manière trop peu attrayante pour attirer l'intérêt.

Le second inconvénient tient au fait que ce type de recherche n'est envisageable que pour une population relativement limitée d'individus, de l'ordre de quelques dizaines, et devient rapidement inapplicable à des populations de plusieurs centaines ou milliers d'individus, voire plus : dans ce cas, la sélection des individus tient plus au hasard des rencontres qu'à une recherche exhaustive au sein de la population d'internautes concernée.

L'un des but de l'invention est de s'affranchir de ces limitations, en proposant un système informatique permettant de détecter des traits communs de caractère entre individus appartenant à une population d'internautes, et ce :
― de manière à la fois exhaustive et purement déterministe : la recherche étant appliquée à la totalité de la population d'intemautes, sans exception, et d'une manière éliminant toute part subjective à la sélection des individus, et
― qui soit applicable sans limitation à une population importante, par exemple de plusieurs milliers ou dizaines de milliers d'intemautes, ou même bien plus, et de façon totalement transparente pour un internaute donné, c'est-à-dire que la taille de la population au sein de laquelle est effectuée la recherche sera sans incidence sur la pertinence et la rapidité de la sélection effectuée par le système.

Essentiellement, l'invention propose un système informatique comprenant, à cet effet un ensemble de *N* terminaux, chacun de ces terminaux étant attribué à une personne d'une population de *M* personnes (*M* ≤ *N*), associé à un site informatique central comprenant des moyens de communication, pour assurer une télétransmission bidirectionnelle de données entre le site et les terminaux, et des moyens d'interrogation, aptes à adresser aux terminaux une batterie de *n* questions prédéfinies à réponse fermée du type à choix multiples.

Chaque terminal comprend des moyens d'identification, aptes à émettre vers le site un identifiant propre à la personne utilisatrice du terminal, des moyens de réception et d'affichage des n questions successives adressées par le site, et des moyens de saisie et d'émission vers le site de messages contenant des réponses apportées auxdites n questions successives.

Le site comprend en outre : des moyens de recueil, aptes à collecter les réponses apportées par les *M* personnes à la batterie de n questions et reçues des terminaux, et pour définir à partir de ces réponses un ensemble de *M* vecteurs de dimension n, représentatifs chacun d'un profil propre à la personne ; des moyens corrélateurs, aptes à comparer deux à deux les *M* vecteurs et déterminer, pour chaque couple de vecteurs comparés, un paramètre fonction du taux de réponses coïncidentes sur les n réponses recueillies ; des moyens sélecteurs, aptes, pour une personne donnée quelconque parmi les *M* personnes, à extraire de la population des (*M*-1) autres personnes une sous-population de *P* personnes (*P* < (*M*-1)) dont les paramètres sont représentatifs des similitudes les plus élevées ; des moyens pour adresser à ladite personne donnée les identifiants propres desdites P personnes de la sous-population ; et des moyens de mise en relation, aptes à établir un lien de communication bidirectionnel entre ladite personne donnée et l'une au moins desdites *P* personnes de la sous-population.

Le paramètre en question peut notamment être un indice de similitude *i* (0 ≤ *i* ≤ 100%) d'autant plus élevé que la proportion de réponses coïncidentes sur les *n* réponses recueillies est élevée, les moyens sélecteurs étant des moyens aptes, pour une personne donnée quelconque parmi les *M* personnes, à (i) trier par indice de similitude décroissant la population des (*M*-1) autres personnes et (ii) extraire de cette dernière la sous-population présentant les indices de similitude les plus élevés.

Dans une forme de mise en oeuvre particulièrement avantageuse, l'ensemble de *N* terminaux comprend, d'une part, des terminaux de type informatique reliés par un premier lien de communication au site informatique central et, d'autre part, des terminaux de type téléphonie mobile, et le système informatique comprend des moyens d'interfaçage, aptes à établir un second lien de communication entre les terminaux de téléphonie mobile et le site informatique central. Ce dernier comprend également des moyens de formatage, pour appliquer à une même information un format d'échange de données différent, spécifique au type de terminal, selon que cette information est échangée avec un terminal de type informatique ou bien avec un terminal de type téléphonie mobile.

Le format d'échange de données différent, spécifique au type de terminal, peut en particulier être un format de type web pour les terminaux de type informatique et un format de type WAP, GPRS ou UMTS-3G pour les terminaux de type téléphonie mobile.

Les moyens de recueil peuvent éventuellement comprendre des moyens pour appliquer un coefficient de pondération à chacune des réponses recueillies afin de définir ledit vecteur de dimension *n* représentatif du profil propre à la personne.

Dans une forme particulière de mise en oeuvre, les moyens corrélateurs sont des moyens d'addition terme à terme des deux séries de *n* réponses formant profil propre aux deux personnes comparées, l'indice de similitude étant la valeur numérique du résultat de cette addition.

Éventuellement, les moyens d'interrogation peuvent, pour au moins certaines des questions prédéfinies de la batterie de *n* questions adressées aux terminaux, appliquer une temporisation interdisant la saisie de la réponse à la question correspondante par le terminal avant l'expiration de cette temporisation.

L'effectif *P* de la sous-population est préférentiellement compris entre 1 et 10, de préférence inférieur à cinq personnes.

Si la population de *M* personnes est une population d'effectif variable, on peut prévoir de réitérer la mise en oeuvre des moyens sélecteurs au fur et à mesure de l'accroissement de la population, en envoyant automatiquement un message de signalisation à celles des personnes pour lesquelles l'indice de similitude trouvé est supérieur ou égal à l'indice de similitude minimal de la sous-population des (*M*-1) autres personnes précédemment extraite.

Le site informatique central comprend avantageusement des moyens de routage aptes, après établissement du lien de communication bidirectionnel entre ladite personne donnée et l'une au moins desdites *P* personnes de la sous-population, à diffuser un message de questionnement libre à celles de ces *P* personnes pour lesquelles ledit lien a été établi, et à ces seules personnes, et à rediriger vers ladite personne donnée les réponses éventuellement apportées par ces personnes. Le message de questionnement libre peut notamment comprendre un champ contenant une question et un champ contenant un nombre fini de réponses prédéterminées possibles. Le site informatique central peut alors opérer une sélection majoritaire sur lesdites réponses apportées et/ou un classement sur ces réponses, puis présenter à ladite personne donnée le résultat de cette sélection ou de ce classement.

On va maintenant décrire plus en détail l'invention, en référence à la figure unique annexée qui est une représentation schématique, par blocs, du système de l'invention.

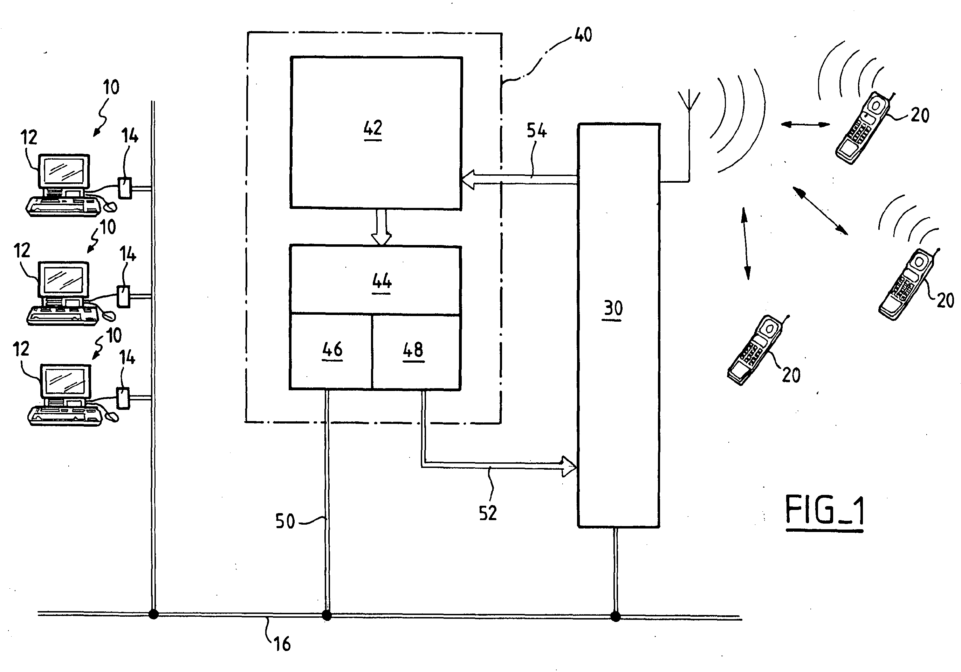

Sur la figure 1, la référence 10 désigne des terminaux informatiques, avec pour chacun un micro-ordinateur 12 relié par une interface 14 (modem ou décodeur) à un réseau de télécommunication 16 qui est un réseau filaire terrestre tel que le réseau téléphonique (en mode commuté ou en mode ADSL), un réseau de télédistribution par câble ou encore une connexion au réseau intemet via un serveur commun à plusieurs postes.

Le système comprend par ailleurs un certain nombre de terminaux téléphoniques 20, reliés par un lien de communication hertzien à une interface commune 30 du type commutateur de téléphonie mobile. Les terminaux téléphoniques 20 sont dotés de fonctions leur permettent d'échanger des données numériques avec l'interface 30 selon diverses technologies bien connues telles que SMS, WAP, GPRS ou UMTS-3G. Chacun de ces terminaux peut afficher sur son écran des messages textuels, plus précisément des questions qui lui sont adressées par l'interface 30, avec possibilité pour l'utilisateur de saisir au clavier une réponse et d'envoyer celle-ci en retour à l'interface 30.

De façon caractéristique de l'invention, le système comporte un site informatique central 40, typiquement un site intemet. Fonctionnellement, ce site 40 comprend une unité 42 formant moteur de questionnement et corrélateur de réponses, associé à une unité 44 de mise en forme des questions, avec deux sous-unités 46 et 48 capables de formater les messages contenant ces questions en fonction du type de terminal utilisé. Plus précisément :
― la sous-unité 46 formate les messages afin qu'ils puissent être reçus et affichés par les micro-ordinateurs 12 des terminaux informatiques 10, par exemple sous la forme de pages Web lisibles par un navigateur, émises sur le réseau filaire terrestre 16 auquel le site 40 est relié par la liaison 50.
― la sous-unité 48 réalise au contraire un formatage adapté à un affichage sur des téléphones mobiles, par exemple sous la forme de pages WAP envoyées à l'interface 30 via le lien de communication 52.

Il convient de noter que le contenu des messages formatés par les unités 46 et 48, c'est-à-dire la teneur des questions, est identique, seule change la mise en page selon que les informations doivent être affichées par des terminaux informatiques ou par des terminaux de téléphonie mobile.

L'interface 30 est également reliée au bloc 42 via une liaison haut débit 54 permettant de transférer à ce bloc 42 les réponses reçues de la multitude de téléphones mobiles 20 connectés au réseau, afin que ces réponses soient traitées par le bloc 42 faisant en ce cas fonction de corrélateur de réponses.

Les terminaux informatiques 10 et les téléphones mobiles 20 ne sont pas dédiés à un utilisateur particulier; un même utilisateur peut en outre détenir à la fois un terminal informatique 10 et un téléphone mobile 20, qu'il utilisera indifféremment selon les circonstances (par exemple selon qu'il est chez lui ou à l'extérieur). En d'autres termes, le système peut comprendre, toutes catégories confondues, un nombre *N* de terminaux plus élevé que le nombre *M* des utilisateurs.

L'utilisateur devra s'identifier auprès du serveur 40 par un protocole en lui-même classique, avec composition d'une adresse ou d'un numéro de téléphone spécifique, puis envoi d'un identifiant ou numéro d'abonné (*login*) et d'un mot de passe.

On va maintenant décrire la manière dont ce système est mis en oeuvre.

Essentiellement, la technique de l'invention consiste à adresser aux différents utilisateurs une batterie de questions, typiquement de plusieurs centaines de questions, d'un type particulier permettant de révéler certains traits de la personnalité de l'individu.

Ces questions sont du type "questionnaire à choix multiple", c'est-à-dire qu'il s'agit de questions fermées accompagnées d'une liste de réponses possibles entre lesquelles il est demandé à l'utilisateur de choisir. Le cas le plus simple est celui des questions binaires où une seule alternative est proposée, mais il est bien entendu possible d'envisager des questions où un plus grand nombre de réponses est proposé, cas qui pourra toujours se réduire à une série de sous-questions binaires.

Le point de départ de l'invention est une réflexion conduite il y a plusieurs années par l'inventeur dans un domaine tout autre, concernant les associations d'idées, champs sémantiques et distances sémantiques entre deux termes. On pourra en particulier se référer à cet égard à Moreno R, *Théorie du Bordel Ambiant,* Chap. 2, 1^{re} éd., Paris, Belfond, 1990: 13-44.

Ce même auteur, outre les analyses relatées dans l'ouvrage précité, avait élaboré en 1988 un algorithme permettant, dans un vocabulaire restreint, de retrouver les termes sémantiquement les plus "proches" les uns des autres.

Cet algorithme était appliqué à un ensemble limité de mots (au plus quelques centaines de mots), par exemple *M* = 98 mots courants de la langue française. Chacun des *M* mots de cet ensemble était alors confronté à une batterie de questions à réponse binaire, par exemple 64 questions, conduisant à un codage sur 64 bits, ces questions étant d'ordre très général, conceptuelles et souvent de nature abstraite, par exemple : "pèse quelque chose ?", "établit une communication, un lien ?", "a un rapport avec le mouvement ?", "est matériel/immatériel ?", etc.

On obtenait ainsi, pour chacun des *M* mots, un profil sémantique constitué par une série ordonnée de 64 bits ("0" ou "1" selon que la réponse à chacune des questions est positive ou négative), série qui peut être traduite en un code qui est propre au mot en question. Ce code peut être représenté de façon univoque par quatre caractères alphanumériques (un caractère étant codé sur 2 octets, soit 16 bits).

Ensuite, chacun des *M* mots était confronté aux (*M*-1) autres mots, par exemple par addition booléenne des deux valeurs binaires. Le résultat obtenu était un profil de concordance, également sur 64 bits, qui pouvait être traduit en une note, de valeur d'autant plus élevée que le nombre de bits concordant entre les deux termes est élevé, le cas échéant avec application d'une pondération selon la nature des questions posées.

Les (*M*-1) termes ainsi évalués étaient ensuite triés, en plaçant en tête ceux d'entre eux qui présentent la note la plus élevée, et étaient alors considérés comme "synonymes" d'une part le terme en question, et d'autre part celui des (*M*-1) autres termes présentant la note la plus élevée ou, à la rigueur, ceux des (*M*-1) autres termes présentant les deux notes les plus élevées. On obtenait ainsi *M* couples ou triplets de synonymes.

La mise en oeuvre concrète de ce procédé montrait que, malgré la généralité des concepts constituant la batterie de questions, l'algorithme permettait de rapprocher des termes présentant entre eux des associations d'idées, alors même que le lien conceptuel entre ces deux termes ne faisait pas du tout partie des questions posées.

La présente invention utilise une technique comparable de questionnement et de traitement des réponses, appliquée à des individus, au lieu de l'être à des mots, avec la différence que, dans l'invention, la part subjective se situe exclusivement dans le choix par l'individu de la réponse à la question posée, et que la totalité du processus est mis en oeuvre par le système de l'invention de manière purement objective et déterministe, c'est-à-dire :
― sans aucune intervention humaine : en particulier le système de l'invention n'effectue aucune interprétation sur le fond de la teneur des réponses, et
― de façon exhaustive, c'est-à-dire sans aucune part d'aléa dans la sélection ultérieure des individus présentant les plus grandes similitudes de caractère entre eux.

La première phase de ce processus consiste à poser à un individu donné, une fois que celui-ci s'est identifié auprès du site, la batterie des n questions, questions qui seront les mêmes pour tous les individus participant au système.

Comme il est nécessaire de disposer d'un nombre élevé de questions, typiquement plusieurs centaines pour que le système puisse fournir des résultats pertinents, il n'est pas envisageable de poser la totalité de ces questions à l'utilisateur au cours d'une même session. La session pourra donc être fractionnée, le profil de l'utilisateur, déterminé à partir de la série de réponses fournies, étant ainsi constitué progressivement au fil des jours.

La faculté de recevoir les questions et d'adresser les réponses au moyen de téléphones mobiles permet en particulier d'occuper de manière distrayante les temps morts tels que les attentes dans les aéroports, dans les salles d'attente, le temps passé dans les transports en commun, etc., les questions étant conçues avec une part suffisante d'inattendu et d'humour pour ne pas lasser l'utilisateur.

La batterie de questions est produite par le bloc 42 faisant fonction de moteur de questionnement, et adressée avec le formatage approprié par les moyens spécifiques 44, 46, 48 soit sous forme de pages Web, soit sous forme de messages affichables sur l'écran d'un téléphone portable.

Les réponses sont recueillies par le bloc 42 soit à partir du réseau filaire terrestre (lien de communication 50) soit depuis le réseau hertzien (lien de communication 54).

Une fois les réponses aux n questions reçues, le bloc 42, faisant fonction de corrélateur de réponses, ordonne ces réponses de manière à constituer un vecteur de dimension n représentatif du profil propre de l'individu.

Si des profils propres ont ainsi été constitués pour *M* individus, le vecteur est alors comparé à tous les autres vecteurs conservés en mémoire par le système pour les (*M*-1) autres utilisateurs ayant déjà répondu en totalité à la batterie de questions.

La comparaison de ces propres profils consiste, dans la forme la plus simple, à déterminer le pourcentage de réponses communes entre un profil donné et tous les autres profils auxquels celui-ci est confronté, par exemple par addition booléenne des deux valeurs binaires représentatives des profils respectifs.

Le résultat obtenu peut être traduit en une note ou indice de similitude *i* (0 ≤ *i* ≤ 100%) fonction du taux de réponses coïncidentes sur les *n* réponses recueillies, de valeur d'autant plus élevée que le nombre de réponses concordantes est important.

Le cas échéant, une pondération peut être appliquée selon la nature des questions posées, pour sur-pondérer certaines questions jugées particulièrement révélatrices du caractère de l'individu ou, au contraire, sous-pondérer d'autres réponses d'intérêt moindre.

À partir de l'indice de similitude ainsi calculé, le système sélectionne alors, parmi tous les utilisateurs auxquels le profil en question a été confronté (au nombre de *M*-1), ceux pour lesquels l'indice de similitude est le plus élevé, par exemple une population de *P* = 3, 5 ou 10 personnes sélectionnées.

À ce stade, il peut être souhaitable d'appliquer un seuil en deçà duquel un individu ne sera jamais sélectionné, notamment dans le cas d'une population de départ (les *N* individus) relativement faible : en effet, un indice de similitude trop proche de 50 % (dans le cas de réponses binaires) n'est pas statistiquement significatif, il peut être alors souhaitable de fixer un seuil, par exemple de 70 %, en deçà duquel un profil ne sera pas sélectionné.

Le système délivre alors à l'utilisateur concerné les adresses (adresses internet ou WAP) des *P* personnes de la sous-population ainsi isolée, et établit automatiquement un lien de communication bidirectionnel entre cette personne et l'une au moins des *P* personnes de la sous-population.

Ces *P*+1 utilisateurs pourront alors échanger, cette fois-ci en format libre, des questions leur permettant de faire plus ample connaissance, de recueillir des conseils, etc., en étant pleinement assurés que la diffusion de ces questions ou de ces messages sera réduite à un groupe très limité des quelques individus présentant entre eux des profils extrêmement proches.

Les questions diffusées au sein de ce groupe restreint pourront être des questions accompagnées de réponses possibles, en nombre réduit. Les réponses données par les autres membres du groupe restreint pourront dans ce cas être automatiquement traitées par le système, par exemple avec une sélection majoritaire, de manière à présenter à l'utilisateur ayant posé la question la réponse la plus fréquemment apportée par les autres membres du groupe restreint, avec éventuellement un classement des réponses.

Il peut être avantageux, pour au moins certaines des questions de la batterie de questions d'appliquer une temporisation interdisant la saisie d'une réponse avant l'expiration d'une durée donnée. De cette manière, il est possible d'introduire un délai de réflexion obligatoire forçant l'utilisateur à fournir une réponse réfléchie, évitant que celle-ci s'apparente à un simple tirage au sort face à une question pouvant lui sembler a *priori* trop arbitraire.

La discrétion et la confidentialité des échanges entre les membres du groupe peuvent être conservées par l'utilisation de pseudonymes (les identifiants utilisés par les utilisateurs lors de leur premier enregistrement auprès du système). Si les membres du groupe souhaitent révéler leur identité, cette démarche sera extérieure au système de la présente invention, qui s'est seulement contenté de les sélectionner et les mettre en communication télématique.

## Revendications

1. Un système informatique, **caractérisé en ce qu'**il comprend :
― un ensemble de *N* terminaux (10, 20), chacun de ces terminaux étant attribué à une personne d'une population de *M* personnes (*M* ≤ *N*),
― un site informatique central (40), comprenant :
· des moyens de communication (30 ; 50), pour assurer une télétransmission bidirectionnelle de données entre le site et les terminaux,
· des moyens d'interrogation (42), aptes à adresser aux terminaux une batterie de *n* questions prédéfinies à réponse fermée du type à choix multiples, et
chaque terminal comprenant :
― des moyens d'identification, aptes à émettre vers le site un identifiant propre à la personne utilisatrice du terminal,
― des moyens de réception et d'affichage des *n* questions successives adressées par le site, et
― des moyens de saisie et d'émission vers le site de messages contenant des réponses apportées auxdites *n* questions successives,
le site comprenant en outre :
· des moyens de recueil, aptes à collecter les réponses apportées par les *M* personnes à la batterie de *n* questions et reçues des terminaux, et pour définir à partir de ces réponses un ensemble de *M* vecteurs de dimension *n*, représentatifs chacun d'un profil propre à la personne,
des moyens corrélateurs, aptes à comparer deux à deux les *M* vecteurs et déterminer, pour chaque couple de vecteurs comparés, un paramètre fonction du taux de réponses coïncidentes sur les n réponses recueillies,
· des moyens sélecteurs, aptes, pour une personne donnée quelconque parmi les *M* personnes, à extraire de la population des (*M*-1) autres personnes une sous-population de *P* personnes (*P* < (*M*-1)) dont les paramètres sont représentatifs des similitudes les plus élevées,
· des moyens pour adresser à ladite personne donnée les identifiants propres desdites *P* personnes de la sous-population, et
· des moyens de mise en relation, aptes à établir un lien de communication bidirectionnel entre ladite personne donnée et l'une au moins desdites *P* personnes de la sous-population.

2. Le système informatique de la revendication 1, dans lequel :
― ledit paramètre est un indice de similitude *i* (0 ≤ *i* ≤ 100%) d'autant plus élevé que la proportion de réponses coïncidentes sur les n réponses recueillies est élevée, et
― les moyens sélecteurs sont des moyens aptes, pour une personne donnée quelconque parmi les *M* personnes, à (i) trier par indice de similitude décroissant la population des (*M*-1) autres personnes et (ii) extraire de cette dernière la sous-population présentant les indices de similitude les plus élevés.

3. Le système informatique de la revendication 1, dans lequel :
― ledit ensemble de *N* terminaux comprend, d'une part, des terminaux de type informatique (10) reliés par un premier lien de communication (16) au site informatique central (40) et, d'autre part, des terminaux de type téléphonie mobile (20),
― le système informatique comprend des moyens d'interfaçage (30), aptes à établir un second lien de communication entre les terminaux de téléphonie mobile (20) et le site informatique central (40), et
― le site informatique central comprend également des moyens de formatage (46, 48), pour appliquer à une même information un format d'échange de données différent, spécifique au type de terminal, selon que cette information est échangée avec un terminal de type informatique ou bien avec un terminal de type téléphonie mobile.

4. Le système informatique de la revendication 3, dans lequel ledit format d'échange de données différent, spécifique au type de terminal, est un format de type web pour les terminaux de type informatique et un format de type WAP, GPRS ou UMTS-3G pour les terminaux de type téléphonie mobile.

5. Le système informatique de la revendication 1, dans lequel les moyens de recueil comprennent en outre des moyens pour appliquer un coefficient de pondération à chacune des réponses recueillies afin de définir ledit vecteur de dimension *n* représentatif du profil propre à la personne.

6. Le système informatique de la revendication 2, dans lequel les moyens corrélateurs sont des moyens d'addition terme à terme des deux séries de n réponses formant profil propre aux deux personnes comparées, l'indice de similitude étant la valeur numérique du résultat de cette addition.

7. Le système informatique de la revendication 1, dans lequel les moyens d'interrogation (42) sont en outre aptes, pour au moins certaines des questions prédéfinies de la batterie de *n* questions adressées aux terminaux, à appliquer une temporisation interdisant la saisie de la réponse à la question correspondante par le terminal avant l'expiration de cette temporisation.

8. Le système informatique de la revendication 1, dans lequel l'effectif *P* de ladite sous-population est compris entre 1 et 10, de préférence inférieur à cinq personnes.

9. Le système informatique de la revendication 1, dans lequel la population de *M* personnes est une population d'effectif variable, et les moyens sélecteurs sont aptes à réitérer leur mise en oeuvre au fur et à mesure de l'accroissement de la population, et à envoyer automatiquement un message de signalisation à celles des personnes pour lesquelles l'indice de similitude trouvé est supérieur ou égal à l'indice de similitude minimal de la sous-population des (*M*-1) autres personnes précédemment extraite.

10. Le système informatique de la revendication 1, dans lequel le site informatique central comprend des moyens de routage aptes, après établissement du lien de communication bidirectionnel entre ladite personne donnée et l'une au moins desdites *P* personnes de la sous-population, à diffuser un message de questionnement libre à celles de ces *P* personnes pour lesquelles ledit lien a été établi, et à ces seules personnes, et à rediriger vers ladite personne donnée les réponses éventuellement apportées par ces personnes.

11. Le système informatique de la revendication 10, dans lequel ledit message de questionnement libre comprend un champ contenant une question et un champ contenant un nombre fini de réponses prédéterminées possibles.

12. Le système informatique de la revendication 11, dans lequel le site informatique central comprend des moyens aptes à opérer une sélection majoritaire sur lesdites réponses apportées, et à présenter à ladite personne donnée le résultat de cette sélection.

13. Le système informatique de la revendication 12, dans lequel le site informatique central comprend des moyens aptes à opérer un classement desdites réponses apportées, et à présenter à ladite personne donnée le résultat de ce classement.
